# FASCICULE DE BREVET EUROPEEN

(11) **EP 0 996 897 B1**
(45) Date de publication et mention de la délivrance du brevet: **10.04.2002**
(21) Numéro de dépôt: 98939697.3
(22) Date de dépôt: 16.07.1998
(51) Int. Cl.: G06F 17/24

(54) **PROCEDE DE CREATION DE DOCUMENTS A PARTIR D'IMAGES CORRIGEES**
VERFAHREN DER DOKUMENTERZEUGUNG MITTELS KORRIGIERTER BILDER
METHOD FOR CREATING DOCUMENTS FROM CORRECTED IMAGES

(30) Priorité: 17.07.1997 FR 9709100
(43) Date de publication de la demande: 03.05.2000
(73) Titulaire: Arnaud, Jean Pierre Alfred, F-95160 Montmorency (FR)
(72) Inventeur: ARNAUD, Jean, F-95160 Montmorency (FR); DECAMPS, Viviane, F-95170 Deuil-La-Barre (FR); HAUTBERGUE, Bernard, F-94340 Joinville-le-Pont (FR)
(74) Mandataire: Arnaud, Jean Pierre Alfred
(86) Numéro de dépôt international: FR9801563
(87) Numéro de publication internationale: WO9904348

(56) Documents cités:
- EP-A- 0 179 279
- EP-A- 0 407 935
- EP-A- 0 629 078
- US-A- 5 111 514
- MORISHITA T ET AL: "Integrated document editing and organizing system (IDEOS)" NEC RESEARCH AND DEVELOPMENT, APRIL 1984, JAPAN, no. 73, pages 58-65, XP002059602 ISSN 0547-051X
- "PERSONAL COMPUTER FORM WRITER" IBM TECHNICAL DISCLOSURE BULLETIN, vol. 31, no. 9, 1 février 1989, page 355 XP000212394

## Description

La présente invention concerne un procédé de création d'un document qui peut être imprimé, par obtention d'une image d'un document initial par lecture optique, afin que cette image puisse être utilisée pour un traitement ultérieur.

La demande de brevet français n° 96.01 358 décrit un procédé d'établissement d'un formulaire à partir d'un formulaire vierge qui possède des champs à compléter qui sont répartis sur sa surface. Dans une première phase, ce procédé comprend la formation d'une image du formulaire vierge par lecture optique et la mémorisation de l'image obtenue ; dans une seconde phase, le procédé comprend l'affichage de l'image du formulaire vierge et l'exécution d'un groupe d'opérations comprenant le positionnement d'un curseur sur l'image d'un champ à saisir et la saisie de données dans une zone correspondant à ce champ, puis l'impression, sur le formulaire vierge, des données saisies uniquement. Une image du formulaire vierge et des données saisies peut en outre être mémorisée.

Dans ce procédé, les données sont saisies sur un écran dans une zone définie par rapport à l'image du formulaire qui doit être complété, et elles sont ensuite imprimées sur le formulaire vierge. Il est primordial que les données imprimées soient parfaitement positionnées sur les champs du formulaire vierge, et il faut donc que l'image affichée sur l'écran, par rapport à laquelle les données sont saisies, corresponde au positionnement des données imprimées sur le formulaire lui-même.

Le procédé précité comporte une première étape de lecture optique, puis une étape d'impression. Chacune de ces étapes introduit des erreurs.

Ainsi, les lecteurs optiques dits "à plat" donnent des images présentant relativement peu d'erreurs aléatoires, mais ils présentent souvent une erreur systématique dans une direction au moins, souvent supérieure à un millimètre. Les lecteurs optiques dits "à défilement", qui sont bien moins coûteux que les lecteurs à plat, présentent souvent des erreurs importantes non seulement en translation (plusieurs millimètres), mais aussi en rotation (plusieurs degrés) : il n'est pas rare qu'une image lue avec un lecteur optique ("scanner") du type à défilement présente un décalage en rotation dans le plan de l'image. En outre, les images de pages blanches présentent souvent un fond grisé irrégulier.

En outre, on sait que les imprimantes ont des marges différentes et présentent une précision plus ou moins grande sur la longueur (erreur de prise du papier en général limitée à un millimètre) et sur la largeur (guidage plus ou moins rectiligne, centrage du papier).

Il est fréquent que des formulaires comportent des groupes de cases à cocher voisines et de petites dimensions, et que l'erreur de positionnement d'une coche ne doive pas dépasser une valeur de l'ordre du millimètre. Il est donc indispensable de limiter la somme des erreurs à la lecture et à l'impression à une valeur de l'ordre du millimètre. Comme l'impression à elle seule donne déjà une erreur de cet ordre, il faut que l'erreur après la lecture soit nulle.

L'invention concerne un procédé qui évite de recommencer la lecture jusqu'à l'obtention d'une image parfaite, par correction de l'image obtenue, quel que soit le type de lecteur optique utilisé.

On a décrit ce problème dans le cas d'un procédé d'établissement de formulaires ayant des champs à compléter, mais il se pose aussi dans le cas d'un procédé de modification de documents graphiques et dans un procédé de création de documents graphiques. Dans tous ces procédés, il faut que l'image d'un document initial ait été corrigée des erreurs dues à la lecture optique.

Le document EP-A-0 407 935 concerne un système dont le but est un traitement automatique très complet par ordinateur de données de document. Le système permet une correction d'inclinaison et de déplacement de données d'image dans laquelle il détecte des lignes (gauche, droite, supérieure ou inférieure) et calcule une inclinaison et un déplacement de la ligne ou des lignes sélectionnées. Il effectue ensuite la correction en fonction de ce calcul. Ce système ne permet pas à un opérateur d'effectuer la correction de l'image comme il le souhaite.

L'invention concerne un procédé qui, pour la création d'un document final, par exemple dans les exemples précités, permet à un opérateur de corriger l'image du document initial afin que les saisies réalisées soient positionnées dans le document final comme le souhaite l'opérateur.

Plus précisément, l'invention concerne un procédé de création d'un document final qui peut être imprimé, par obtention de l'image d'un document initial par lecture optique, afin que cette image puisse subir un traitement ultérieur. Le procédé comprend, dans une phase initiale, la détermination d'un format de document, la lecture optique du document initial, et l'affichage, sur un écran, d'une image brute du document initial dans un cadre correspondant au format de document, puis, dans une phase intermédiaire, une correction de l'image brute par au moins une étape de correction d'image par rapport au cadre correspondant au format, et dans une phase ultérieure, l'utilisation de l'image du document pour le traitement ultérieur.

Dans un premier mode de réalisation, l'étape de correction de l'image brute est une étape de correction par déplacement en translation de l'image dans la direction de sa largeur ou de sa hauteur au moins par une opération dans laquelle un opérateur exécute, avec un organe de saisie choisi entre un organe destiné à un pointage sur l'écran et un organe comprenant des touches de déplacement, un glissement de l'image par rapport au cadre.

Dans un second mode de réalisation, l'étape de correction de l'image brute est une étape de correction par déplacement en rotation dans laquelle un opérateur détermine sur le document une caractéristique parallèle à un bord et, avec un organe de saisie choisi entre un organe destiné à un pointage sur l'écran et un organe comprenant des touches de déplacement, il juxtapose sur l'écran une droite et l'image de la caractéristique, et il commande la rotation de l'image de la valeur de l'angle formé par la droite avec un bord correspondant du cadre.

De préférence, le procédé comprend aussi, après le déplacement de l'image dans le cadre, la formation d'une image corrigée par suppression des parties de l'image brute qui sortent du cadre et par remplissage des parties du cadre comprises entre les limites de l'image et les limites du cadre par des données de remplissage. De préférence, ces données de remplissage sont des données d'aplat de mêmes caractéristiques que les données de la partie voisine de l'image.

Il est avantageux que le procédé comprenne, avant ou pendant la phase initiale, une étape de réglage de la largeur du cadre affiché sur l'écran afin que, lors de l'affichage d'une image d'un document, la largeur de l'image du document affichée sur l'écran soit égale à la largeur du document.

De préférence, la détermination de l'amplitude de la correction par déplacement de l'image est effectuée par superposition du document à l'image affichée dans le cadre.

Il est avantageux que la correction par déplacement en translation de l'image dans la direction de sa largeur ou de sa hauteur au moins comprenne en outre un déplacement de l'image dans un sens et avec une amplitude tels qu'une erreur systématique d'une imprimante destinée à être utilisée pour le document final est compensée.

De préférence, le procédé comporte en outre la correction du grisé du fond de l'image par sélection d'un taux de correction de grisé.

Il est avantageux que le procédé comprenne en outre, pendant ou après la seconde phase, la mémorisation de l'image corrigée.

La détermination du format du document est effectuée soit automatiquement, par l'appareil utilisé pour la lecture optique, soit par saisie, avec un organe de saisie, des dimensions mesurées du document.

Le cadre dans lequel est affichée l'image du document est avantageusement une fenêtre affichée sur un écran d'ordinateur et ayant la largeur du cadre.

Dans un mode de réalisation avantageux, la détermination de l'amplitude d'une correction par déplacement en translation de l'image est effectuée par superposition du document à l'image affichée dans le cadre. L'image affichée a alors un format "à tel". Dans un autre mode de réalisation, la détermination de l'amplitude d'une correction par déplacement en translation de l'image dans une direction est effectuée par mesure, dans la direction correspondante, de la position d'un signe sur le document par rapport à un bord du document, et par mesure de la position du signe sur l'image par rapport à un bord du cadre.

Dans un premier exemple d'application de l'invention, le traitement ultérieur est destiné à l'établissement d'un formulaire vierge ayant des champs à compléter au moins en partie qui sont répartis sur la surface d'une ou plusieurs pages, et le procédé comprend d'abord l'affichage de l'image du formulaire, puis au moins un groupe d'opérations comprenant le positionnement d'un curseur sur l'image à l'emplacement d'un champ ou à son voisinage, la création d'une zone de saisie à l'emplacement du curseur ou à son voisinage, et la saisie de données dans cette zone, puis l'impression, sur un exemplaire du formulaire vierge, des données saisies par ledit groupe d'opérations au moins, à l'exclusion de l'image du formulaire vierge.

Le procédé comprend aussi avantageusement la mémorisation d'une image unique comprenant à la fois l'image du formulaire vierge et les données saisies, sous forme d'une seule image, les zones de saisie ayant un fond transparent ne cachant pas l'image placée au-dessous.

Dans un second exemple d'application de l'invention, le traitement ultérieur est destiné à la création d'un document qui correspond à un document initial ayant une ou plusieurs pages, mais dont au moins une partie est modifiée, et le procédé comprend d'abord l'affichage de l'image du document initial, puis au moins un groupe d'opérations comprenant le positionnement d'un curseur sur l'image à l'emplacement de la partie à modifier ou à son voisinage, la création d'une zone de saisie ayant un fond non transparent à l'emplacement du curseur, et la saisie de données dans cette zone, puis l'impression, sur une feuille vierge, des données saisies par ledit groupe d'opérations au moins et de l'image du document à l'exclusion des parties couvertes par le fond non transparent de la zone.

Dans un troisième exemple d'application de l'invention, le traitement ultérieur est destiné à la création d'un document graphique à partir d'au moins un brouillon, et le procédé comprend, après l'affichage de l'image du brouillon dans une fenêtre et la correction de l'image du brouillon par déplacement en translation ou en rotation ou par grandissement afin qu'une partie voulue de l'image du brouillon ait la position et les dimensions voulues, une étape de création d'une partie au moins du document graphique à l'aide d'outils graphiques avec utilisation de l'image du brouillon pour le décalque au moins partiel de la partie voulue de l'image du brouillon, puis l'impression, sur une feuille vierge, du dessin graphique exécuté, à l'exclusion de l'image du brouillon.

De préférence, les outils graphiques comprennent un outil de dessin vectoriel.

De préférence, dans tous les exemples d'application, il est avantageux que le procédé comprenne, avant la fin de la préparation du document au cours du traitement ultérieur, l'indication de l'imprimante prévue pour l'impression du document final, et l'indication, sur l'image du document en cours de traitement, d'un cadre auxiliaire représentant les marges hors desquelles l'imprimante correspondante n'assure pas d'impression.

D'autres caractéristiques et avantages de l'invention ressortiront mieux de la description qui va suivre, faite en référence aux dessins annexés sur lesquels :
la figure 1 représente un exemple de fenêtre affichée sur un écran et contenant une image d'un formulaire obtenue par lecture optique et qui nécessite des corrections par rotation et déplacement ;
la figure 2, analogue à la figure 1, représente un outil utilisé pour la détermination de l'angle de correction en rotation de l'image représentée sur la figure 1 ;
la figure 3, analogue à la figure 2, représente l'image obtenue après correction de l'erreur en rotation ;
la figure 4, analogue à la figure 3, représente l'image au cours de la correction de décalage en hauteur et en largeur ;
la figure 5, analogue à la figure 4, représente l'image corrigée sur laquelle peut être réalisé un traitement ; et
la figure 6 représente une autre image qui indique la présence d'un cadre représentant les marges d'une imprimante sélectionnée.

On décrit le procédé selon l'invention dans le cas d'un procédé d'établissement de formulaires dans lequel, dans une première phase, un formulaire vierge est lu optiquement afin qu'il donne une image représentative du formulaire vierge sur laquelle peuvent être ajoutées des données saisies qui doivent être imprimées.

Dans une première étape, l'opérateur, ayant un formulaire vierge dans les mains, indique quel est le format de ce formulaire (par exemple "A4" ou sous forme "210 x 297 mm" par exemple). Dans une variante, le lecteur optique détermine lui-même le format. L'opérateur saisit avantageusement à ce moment des données de nom du formulaire, et peut par exemple saisir "dépôt marque FR".

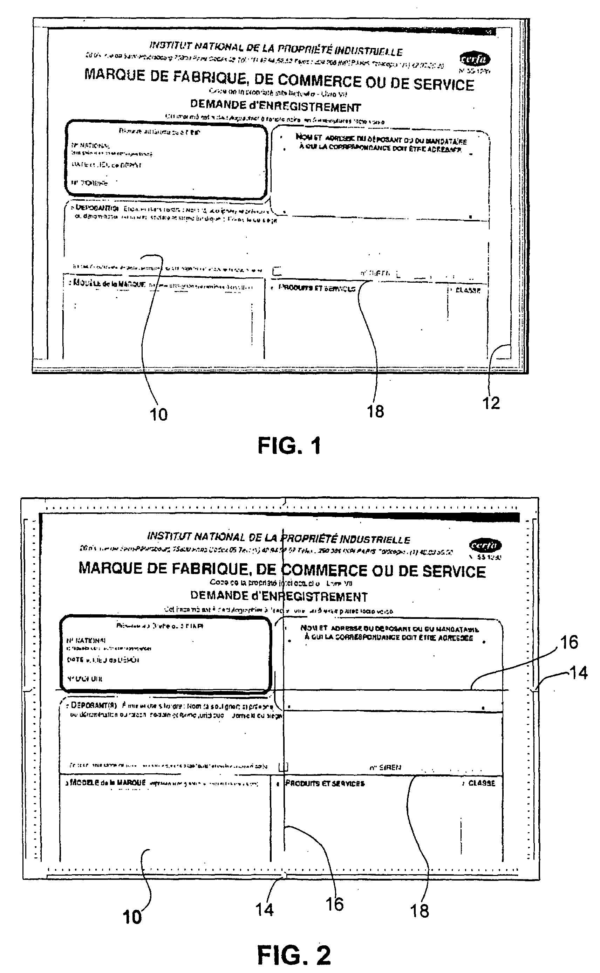

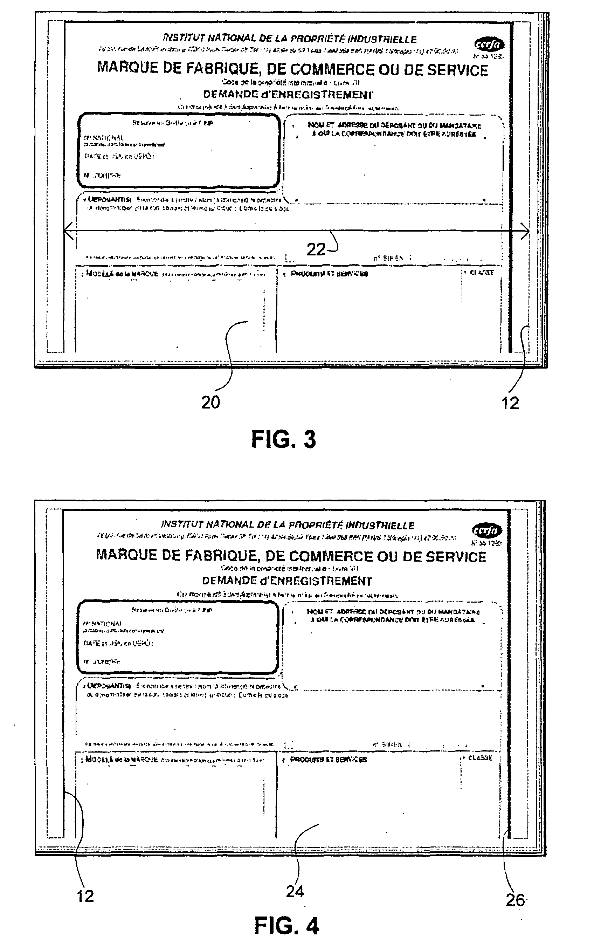

Ensuite, il introduit le formulaire dans un lecteur optique qui, dans l'exemple considéré, est un lecteur optique à défilement. L'image 10 qu'il obtient est représentée sur la figure 1 dans un cadre 12 d'une fenêtre. On note que, pour être corrigée, cette image 10 doit être tournée dans son plan (comme l'indique notamment la marge supérieure) et doit être déplacée pour la correction des marges. L'opérateur sélectionne donc l'outil de correction de rotation. Cet outil manuel (c'est-à-dire commandé directement par l'opérateur avec un organe de pointage, tel qu'une souris) est représenté sous forme d'une croix dont les deux barres 16 relient chacune deux curseurs 14 opposés par rapport à l'image. L'opérateur déplace l'une ou l'autre barre à l'aide des deux curseurs correspondants 14 pour l'aligner sur une ligne 18 qu'il peut déterminer comme étant parallèle à un bord du formulaire vierge. Il commande alors la correction de rotation par sélection d'un bouton de "correction" et obtient l'image 20 corrigée en rotation qui est représentée sur la figure 3. Bien entendu, l'outil peut ne comprendre qu'une seule barre, associée à une seule paire de curseurs.

L'opérateur effectue alors la correction par déplacement en translation. L'outil de correction par déplacement en translation est encore un organe de pointage ; ainsi, lorsque le curseur d'une souris est placé n'importe où sur l'image, le bouton de droite de la souris est maintenu enfoncé, et la souris est déplacée, l'image brute se déplace en translation dans le cadre 12, dans toute direction du plan de ce cadre.

Lorsque l'image affichée a la même dimension que le formulaire ("à tel"), l'opérateur peut simplement placer le formulaire vierge dont il dispose contre l'écran pour déterminer quelles doivent être les amplitudes des déplacements en largeur et en hauteur de l'image dans le cadre pour qu'elle reproduise l'image du formulaire. Dans une variante, l'opérateur peut déterminer ces amplitudes par mesure de la distance comprise entre un signe particulier, par exemple un trait vertical ou horizontal, et un bord correspondant, et il peut déplacer l'image en plaçant le curseur sur l'image du signe correspondant, puis en observant un compteur qui indique la distance correspondante (verticale et/ou horizontale).

Il est donc très avantageux que, sur l'écran d'affichage, la largeur 22 du cadre 12 dans lequel est affichée l'image soit égale à la largeur de l'image ("à tel"). Par exemple, si le document est au format A4, la fenêtre a un cadre de largeur égale à 21 cm sur l'écran. Bien qu'elle puisse être obtenue à tout moment, cette caractéristique est de préférence obtenue dans une étape d'étalonnage, exécutée par exemple lors de l'installation du logiciel qui met en oeuvre le procédé. Cette étape comprend, avant ou pendant la phase initiale, le réglage sur l'écran de la largeur 22 du cadre dans lequel est affichée une image d'un document de largeur connue, soit formée par lecture optique, soit préalablement enregistrée et représentant par exemple une échelle de mesure, afin que la largeur du cadre ou de l'image du document affichée sur l'écran soit égale à la largeur voulue ou du document. Ce réglage est commandé par exemple par pointage sur l'une de deux flèches de sens opposés qui commandent respectivement un élargissement et un rétrécissement de la largeur du cadre d'affichage de l'image.

Quel que soit le procédé utilisé pour la correction en translation, le résultat obtenu correspond à l'image 24 indiquée sur la figure 4 sur laquelle on note que la partie supérieure de l'image est sortie du cadre et que, par contre, une partie 26 sans image, placée à droite, a été introduite dans le cadre, si bien qu'une bande sombre indique l'amplitude du décalage.

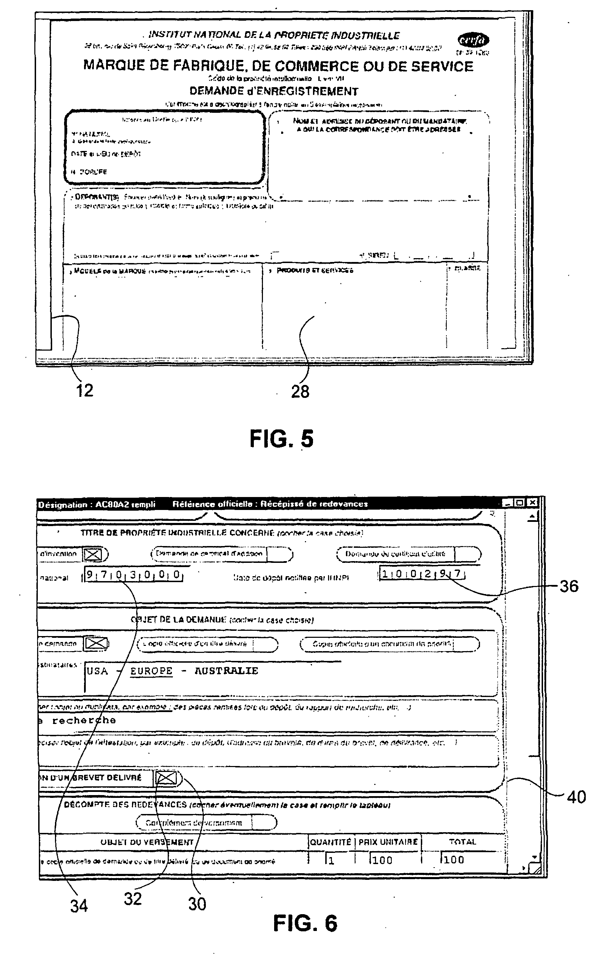

L'opérateur peut recommencer la correction jusqu'à ce qu'il détermine que le résultat est convenable, par exemple afin que les erreurs restantes soient inférieures à une fraction de millimètre ; il valide alors les corrections et obtient une image 28 telle que représentée sur la figure 5. On note, par rapport à l'image initiale 10 de la figure 1, que les parties sortant du cadre ont été coupées et que les parties incluses dans le cadre ont été remplies par des données donnant un aplat de la couleur du fond, si bien que le fait que l'image a été corrigée n'est pas discernable.

Il est fréquent que le fond des images lues comporte un grisé irrégulier, dû au contact irrégulier du document et du lecteur dans l'appareil de lecture. Il est souhaitable de faire disparaître ce grisé, surtout si l'image doit ensuite. être imprimée. Ce résultat est obtenu par un procédé classique de filtrage d'image. Il est avantageux que, selon l'invention, l'opérateur puisse choisir un taux de filtrage en fonction de l'importance du grisé et de la nature générale du document, et commander l'application de ce taux de filtrage. Un tel filtrage comprend par exemple la mise à une valeur limite de l'intensité des points de l'image ("pixels") qui ne diffère de cette valeur limite que d'une ou deux unités. A cet effet, l'outil dont dispose l'opérateur peut comprendre un curseur mobile sur une échelle ou un compteur associé à deux flèches, pour la sélection d'un taux, et un bouton d'exécution.

L'image 28 est alors avantageusement sauvegardée, et elle peut être utilisée immédiatement, par exemple pour l'établissement d'un formulaire.

Dans une variante, l'image lue optiquement est volontairement modifiée, immédiatement ou juste avant l'impression, de manière que l'image formée diffère de la reproduction fidèle du document. On a ainsi constaté que, dans le cas d'une imprimante particulière à aiguilles utilisée pour l'impression de formulaires en liasse, carbonée ou autre, l'erreur de prise de papier était systématiquement de 2,5 mm. L'invention permet la modification de l'image lue d'un tel formulaire en liasse par déplacement en translation compensant l'erreur systématique de l'imprimante. Ainsi, l'invention présente l'avantage de permettre aussi la compensation des erreurs systématiques des imprimantes utilisées. Pour cette raison, après l'installation du logiciel mettant en oeuvre le procédé selon l'invention, et la désignation des imprimantes utilisées, il est avantageux que, dans la phase initiale de procédé, l'imprimante destinée à être utilisée pour la création du document final soit désignée par l'opérateur afin qu'une erreur systématique de celle-ci puisse être prise en compte.

Ainsi, grâce au procédé précité, l'image obtenue est représentative du document lu optiquement, avec éventuellement prise en compte des erreurs systématiques d'imprimante, et les erreurs créées lors de la lecture optique sont corrigées. Ce document peut donc être utilisé comme référence fiable pour la suite du traitement, par exemple pour la disposition de zones de saisie et la saisie de données.

On se rend compte, sur l'exemple de la figure 6, qu'il est important que les données soient bien positionnées par rapport à l'image pour que l'impression soit convenable par rapport au formulaire vierge. On note en particulier que des cases à cocher 30 doivent recevoir une croix 32 et, comme l'indique notamment le numéro 34 et la date 36 représentés, les chiffres doivent être bien positionnés par rapport à des délimiteurs du formulaire. De manière plus générale, il est important que les zones de saisie, soit de texte, soit de coches notamment, puissent être alignées, par exemple parallèlement à un bord, parce que le formulaire concerné a une série de cases à cocher ou de champs alignés parallèlement à un bord. Les zones de saisie peuvent alors être créées, séparément ou par groupes, directement sous forme alignée, verticalement ou horizontalement, en nombre nécessaire, ou peuvent être alignées après leur création. Les zones de saisie peuvent être déplacées, par groupes ou séparément, afin qu'elles correspondent au mieux à la position des cases et champs.

Dans la technique antérieure, il est possible d'exécuter séparément différentes opérations du procédé selon l'invention à l'aide de logiciels connus. En effet, on connaît déjà des logiciels qui permettent la rotation d'une image, des logiciels qui permettent le déplacement en translation d'une partie d'image sélectionnée dans une fenêtre, des logiciels qui permettent le réglage de la largeur d'une fenêtre d'affichage, des logiciels qui permettent la détermination de la largeur d'un document lors de sa lecture optique, des logiciels qui permettent l'écriture de données sur une image de fond sous forme d'un filigrane, etc. Cependant, aucun des logiciels connus ne permet l'exécution des étapes nécessaires au procédé de l'invention dans le cadre de la formation d'une image corrigée par lecture optique et correction. C'est la combinaison originale de ces étapes qui permet l'obtention d'images corrigées qui évitent l'influence des erreurs de lecture optique sur les documents imprimés.

Dans le procédé décrit à titre d'exemple pour l'établissement de formulaires, les données sont saisies dans des zones de saisie ayant des fonds transparents, si bien que seules les données apparaissent sur l'image qui est complètement représentée au-dessous.

Une autre application du procédé de l'invention porte sur la modification de documents. Il arrive que des dessins, tel que des figures illustrant un document technique, comportent des légendes qui doivent être traduites. Il est dans ce cas commode de remplacer les légendes par création d'une zone opaque, c'est-à-dire de la couleur de fond du document, sur laquelle on peut saisir la traduction des légendes. Dans ce procédé aussi, il est important que les données saisies et les zones opaques soient positionnées sans erreur sur l'image.

Selon une caractéristique avantageuse, la zone de saisie peut être placée à distance de la légende à traduire afin que l'opérateur puisse traduire directement dans la zone de saisie, et cette zone est ensuite déplacée afin qu'elle vienne couvrir la légende à cacher. Dans ce procédé aussi, il est très important que les zones contenant les données saisies cachent bien les légendes.

Lors de l'impression, l'ensemble du document est imprimé avec les nouvelles légendes, sans les parties de l'image du document initial qui se trouvent sous les zones de saisie. Dans ce cas, il est important que les marges de l'imprimante qui doit être utilisée apparaissent, comme indiqué par exemple sur la figure 6 sur laquelle le trait portant la référence 40 indique la marge donnée par l'imprimante, c'est-à-dire que ni des données ni une image ne peuvent être imprimées en dehors de ce cadre auxiliaire.

Une autre application du procédé de l'invention porte sur la réalisation de dessins définitifs à partir de dessins au brouillon, par exemple à main levée. Dans ce cas, il est souhaitable de disposer d'une image du brouillon convenablement positionnée et par rapport à laquelle on peut dessiner avec des outils graphiques, en n'imprimant que le dessin ajouté, sans l'image du brouillon.

Les dessins réalisés doivent respecter un certain nombre de conditions, notamment d'espace occupé dans la feuille, et, en outre, il faut qu'ils soient compris à l'intérieur du cadre auxiliaire représentant les marges d'impression de l'imprimante à utiliser. Dans ce cas, non seulement l'image du brouillon par rapport à laquelle le dessin au propre est réalisé doit être convenablement positionnée, aussi bien en rotation qu'en translation, mais encore il est possible qu'il faille lui faire subir un grandissement, dans un sens ou dans l'autre, afin qu'elle corresponde aux critères fixés et puisse être imprimée convenablement.

Les trois exemples de procédé décrits précédemment, c'est-à-dire pour l'établissement de formulaires, pour la création de documents modifiés et pour la création de documents graphiques, comprennent la création d'une image de fond devant laquelle on réalise une sorte de "calque" qui est entièrement transparent ou qui peut comprendre des zones opaques et qui contient lui-même un certain nombre de données. Le résultat est formé par les seules données du calque et/ou par la superposition des données du calque et de l'image du document initial. Cependant, il est toujours important que le positionnement relatif entre les données du calque et l'image soit obtenu.

Ainsi, l'invention met en oeuvre d'abord une correction de l'image obtenue par lecture optique, puis une maîtrise de l'impression afin que le résultat soit convenablement positionné.

Cependant, malgré toutes les précautions prises, il reste des erreurs qui ne peuvent pas être corrigées. Ainsi, l'erreur aléatoire sur la prise des feuilles de papier dans les imprimantes est souvent de l'ordre du millimètre dans la direction de défilement de la feuille de papier et elle peut aussi être de l'ordre du millimètre en direction latérale.

En l'absence de la mise en oeuvre de l'invention, à ces tolérances d'impression, il faudrait ajouter les tolérances de lecture optique qui, normalement, en l'absence de correction, peuvent atteindre plusieurs millimètres, et il serait alors impossible d'obtenir d'une manière fiable des résultats significatifs.

Ainsi, l'invention permet de supprimer pratiquement totalement les erreurs sur la première phase, c'est-à-dire de lecture optique. La prise en compte des critères propres à l'impression, notamment une erreur systématique, permet alors de réduire les tolérances résultantes aux seules tolérances sur l'impression.

On n'a décrit que les éléments participant directement à la mise en oeuvre de l'invention. Bien entendu, de nombreuses autres caractéristiques peuvent être utilisées, notamment relatives à la nature et à la forme des données saisies sur le "calque", telles que le choix de la police, de sa taille et de ses attributs, les changements de police et de taille, le positionnement de coches dans des cases, l'insertion d'une image (par exemple une signature dans un champ), l'utilisation de couleurs ou non, aussi bien pour l'image de fond que pour les données saisies, lorsqu'une impression en couleurs est possible, etc.

Il est bien entendu que l'invention n'a été décrite et représentée qu'à titre d'exemple préférentiel et qu'on pourra apporter toute équivalence technique dans ses éléments constitutifs sans pour autant sortir de son cadre.

## Revendications

1. Procédé de création d'un document final qui peut être imprimé, par obtention de l'image (10) d'un document initial par lecture optique, afin que cette image puisse subir un traitement ultérieur, comprenant :
dans une phase initiale,
- la détermination d'un format de document,
- la lecture optique du document initial, et
- l'affichage, sur un écran, d'une image brute (10) du document initial dans un cadre (12) correspondant au format de document, dans laquelle un opérateur exécute, avec un organe de saisie choisi entre un organe destiné à un pointage sur l'écran et un organe comprenant des touches de déplacement, un déplacement de l'image par rapport au cadre,
dans une phase intermédiaire,
- une correction de l'image brute (10) par au moins une étape de correction d'image par un déplacement de l'image par rapport au cadre correspondant au format, et
dans une phase ultérieure,
- l'utilisation de l'image (28) du document pour le traitement ultérieur, destiné à la création du document final pour l'impression.

2. Procédé selon la revendication 1, **caractérisé en ce que** la correction par déplacement de l'image brute (10) est une correction par déplacement en translation de l'image dans la direction de sa largeur ou de sa hauteur au moins, au cours de laquelle un opérateur exécute, avec l'organe de saisie, un glissement de l'image par rapport au cadre.

3. Procédé selon la revendication 1, **caractérisé en ce que** la correction par déplacement de l'image brute (10) est un déplacement de l'image en rotation par rapport au cadre correspondant au format, au cours de laquelle un opérateur détermine sur le document une caractéristique parallèle à un bord et, avec l'organe de saisie, juxtapose sur l'écran une droite et l'image de la caractéristique, et commande la rotation de l'image de la valeur de l'angle formé par la droite avec un bord correspondant du cadre.

4. Procédé selon l'une quelconque des revendications précédentes, **caractérisé en ce qu'**il comprend aussi, après le déplacement de l'image dans le cadre, la formation d'une image corrigée (28) par suppression des parties de l'image brute qui sortent du cadre et par remplissage des parties (26) du cadre comprises entre les limites de l'image et les limites du cadre (12) par des données de remplissage

5. Procédé selon l'une quelconque des revendications précédentes, **caractérisé en ce qu'**il comprend, avant ou pendant la phase initiale, une étape de réglage de la largeur (22) du cadre (12) affiché sur l'écran afin que, lors de l'affichage d'une image d'un document, la largeur de l'image du document affichée sur l'écran soit égale à la largeur du document.

6. Procédé selon l'une quelconque des revendications précédentes, **caractérisé en ce que** la détermination de l'amplitude de la correction par déplacement de l'image est effectuée par superposition du document à l'image affichée dans le cadre.

7. Procédé selon l'une quelconque des revendications précédentes, **caractérisé en ce qu'**il comporte en outre la correction du grisé du fond de l'image par sélection par l'opérateur d'un taux de correction de grisé.

8. Procédé selon l'une quelconque des revendications 1 à 7, **caractérisé en ce que** le traitement ultérieur est destiné à l'établissement d'un formulaire vierge ayant des champs à compléter au moins en partie qui sont répartis sur la surface d'une ou plusieurs pages, et il comprend d'abord l'affichage de l'image du formulaire, puis un groupe d'opérations au moins comprenant le positionnement d'un curseur sur l'image à l'emplacement d'un champ ou à son voisinage, la création d'une zone de saisie à l'emplacement du curseur ou à son voisinage, et la saisie de données dans cette zone, puis l'impression, sur un exemplaire du formulaire vierge, des données saisies par ledit groupe d'opérations au moins, à l'exclusion de l'image du formulaire vierge.

9. Procédé selon l'une quelconque des revendications 1 à 7, **caractérisé en ce que** le traitement ultérieur est destiné à la création d'un document qui correspond à un document initial ayant une ou plusieurs pages, mais dont au moins une partie est modifiée, et il comprend d'abord l'affichage de l'image du document initial, puis au moins un groupe d'opérations comprenant le positionnement d'un curseur sur l'image à l'emplacement de la partie à modifier ou à son voisinage, la création d'une zone de saisie ayant un fond non transparent à l'emplacement du curseur, et la saisie de données dans cette zone, puis l'impression, sur une feuille vierge, des données saisies par ledit groupe d'opérations au moins et de l'image du document à l'exclusion des parties couvertes par le fond non transparent de la zone.

10. Procédé selon l'une quelconque des revendications 1 à 7, **caractérisé en ce que** le traitement ultérieur est destiné à la création d'un document graphique à partir d'au moins un brouillon, et il comprend, après l'affichage de l'image du brouillon dans une fenêtre et la correction de l'image du brouillon par déplacement en translation ou en rotation ou par grandissement afin qu'une partie voulue de l'image du brouillon ait la position et les dimensions voulues, une étape de création d'une partie au moins du document graphique à l'aide d'outils graphiques avec utilisation de l'image du brouillon pour le décalque au moins partiel de la partie voulue de l'image du brouillon, puis l'impression, sur une feuille vierge, du dessin graphique exécuté, à l'exclusion de l'image du brouillon.

## Patentansprüche

1. Verfahren zur Erzeugung eines fertigen, zum Ausdruck geeigneten Dokuments, wobei durch optisches Lesen ein Bild (10) eines Ausgangsdokuments gewonnen wird, das einer späteren Behandlung unterzogen werden soll, und wobei das Verfahren
in einer Anfangsphase die folgenden Verfahrensschritte umfaßt:
- Bestimmen eines Formats für das Dokument;
- optisches Lesen des Ausgangsdokuments und
- Darstellung eines unbearbeiteten Bildes (10) des Ausgangsdokuments auf einem Bildschirm in einem dem Dokumentformat entsprechenden Rahmen (12), in dem eine Bedienungsperson ein Verschieben des Bildes relativ zum Rahmen mit Hilfe eines Erfassungsmittels vornimmt, bei dem es sich wahlweise entweder um ein Gerät zum Anklicken des Bildschirms oder um ein mit Verschiebetasten versehenes Mittel handelt;
wobei das Verfahren in einer mittleren Phase den folgenden Verfahrensschritt umfaßt:
- Korrigieren des unbearbeiteten Bildes (10) in wenigstens einem Bildkorrekturvorgang durch Verschieben des Bildes relativ zum dem Format entsprechenden Rahmen; und
wobei das Verfahren in einer Endphase den folgenden Verfahrensschritt umfaßt:
- Durchführen der Endbearbeitung am Bild (28) des Dokuments zur Erzeugung des fertigen, druckbaren Dokuments.

2. Verfahren nach Anspruch 1, **dadurch gekennzeichnet, daß** es sich bei der Korrektur durch Verschieben des unbearbeiteten Bildes (10) um eine Verschiebekorrektur handelt, bei der das Bild wenigstens entweder in Richtung seiner Breite oder in Richtung seiner Höhe einer Translationsbewegung unterzogen wird, wobei die Bedienungsperson während der Translationsbewegung das Bild mit dem Erfassungsmittel relativ zum Rahmen versetzt.

3. Verfahren nach Anspruch 1, **dadurch gekennzeichnet, daß** die Korrektur durch Verschieben des unbearbeiteten Bildes (10) in einer Drehverschiebung des Bildes relativ zum dem Format entsprechenden Rahmen besteht, wobei die Bedienungsperson während der Drehverschiebung am Dokument eine parallel zu einer Kante ausgerichtete Kennlinie bestimmt, auf dem Bildschirm mit dem Erfassungsmittel eine Gerade sowie das Bild der Kennlinie nebeneinander positioniert und Befehle eingibt, die eine Drehung des Bildes um den Wert des zwischen der Geraden und einer entsprechenden Rahmenkante vorhandenen Winkels bewirken.

4. Verfahren nach einem der vorhergehenden Ansprüche, **dadurch gekennzeichnet, daß** das Verfahren nach dem Verschieben des Bildes im Rahmen zusätzlich die Erzeugung eines korrigierten Bildes (28) durch Unterdrückung der über den Rahmen hinausstehenden Bereiche des unbearbeiteten Bildes sowie durch Auffüllen der zwischen dem Rändern des Bildes und den Rändern des Rahmens (12) liegenden Bereiche (26) des Rahmens mit Hilfe von Auffülldaten umfaßt.

5. Verfahren nach einem der vorhergehenden Ansprüche, **dadurch gekennzeichnet, daß** das Verfahren vor oder während der Anfangsphase einen Schritt umfaßt, in dem die Breite (22) des auf dem Bildschirm dargestellten Rahmens (12) derart eingestellt wird, daß nach dem Darstellen eines Dokumentbildes die Breite des auf dem Bildschirm dargestellten Dokumtenbildes der Breite des Dokuments entspricht.

6. Verfahren nach einem der vorhergehenden Ansprüche, **dadurch gekennzeichnet, daß** das Ausmaß der durch ein Verschieben hervorzurufenden Bildkorrektur bestimmt wird, indem man das Dokument über das im Rahmen dargestellte Bild legt.

7. Verfahren nach einem der vorhergehenden Ansprüche, **dadurch gekennzeichnet, daß** unter anderem eine Korrektur des Grautons des Bildhintergrundes erfolgt, indem die Bedienungsperson einen Korrekturbetrag für den Grauton auswählt.

8. Verfahren nach einem der Ansprüche 1 bis 7, **dadurch gekennzeichnet, daß** die Endbearbeitung zur Erstellung eines unausgefüllten Formulars dient, welches Felder enthält, die zumindest teilweise ausgefüllt werden sollen und auf der Oberfläche einer oder mehrerer Seiten verteilt sind, und dadurch daß das Verfahren zunächst das Darstellen des Formularbildes und sodann eine Anzahl von Operationen enthält, die zumindest die Positionierung eines Cursors auf dem Bild an der Stelle, an der sich ein Feld befindet, oder in der Nähe dieser Stelle, die Erzeugung einer Datenerfassungszone an der Stelle, an der sich der Cursor befindet, oder nahe dieser Stelle, und die Erfassung von Daten in dieser Zone beinhaltet, wobei sodann die zumindest durch die erwähnte Anzahl von Operationen erfaßten Daten unter Weglassung des Bildes des unausgefüllten Formulars auf ein Exemplar des unausgefüllten Formulars ausgedruckt werden.

9. Verfahren nach einem der Ansprüche 1 bis 7, **dadurch gekennzeichnet, daß** die Endbearbeitung zur Erzeugung eines Dokuments dient, welches einem Ausgangsdokument mit einer oder mehreren Seiten entspricht, wobei jedoch wenigstens ein Bereich dieses Ausgangsdokuments modifiziert wurde, und daß das Verfahren zunächst das Darstellen des Ausgangsdokumentbildes und sodann wenigstens eine Anzahl von Operationen umfaßt, in denen ein Cursor auf dem Bild an der Stelle, an der sich der zu modifizierende Bereich befindet, oder in der Nähe dieser Stelle positioniert, eine Datenerfassungszone mit einem nicht transparenten Hintergrund an der Stelle, an der sich der Cursor befindet, erzeugt und in dieser Zone Daten erfaßt werden, wobei anschließend die Daten, die zumindest in der erwähnten Anzahl von Operationen erfaßt wurden, sowie das Bild des Dokuments unter Weglassung der durch den nicht transparenten Hintergrund verdeckten Bereiche der Zone auf ein nicht ausgefülltes Blatt gedruckt werden.

10. Verfahren nach einem der Ansprüche 1 bis 7, **dadurch gekennzeichnet, daß** die Endbearbeitung zur Erzeugung eines Grafikdokuments auf der Grundlage wenigstens eines flüchtigen Entwurfs dient und daß das Verfahren nach dem Darstellen des Bildes des flüchtigen Entwurfs in einem Fenster und der Korrektur des Bildes des flüchtigen Entwurfs durch eine Translations- oder eine Drehverschiebung oder durch Vergrößerung, durch die ein gewünschter Bereich des Bildes des flüchtigen Entwurfs eine gewünschte Position und gewünschte Abmessungen erhält, einen Verfahrensschritt umfaßt, in dem zur wenigstens teilweisen Abbildung des gewünschten Bereichs des Bildes des flüchtigen Entwurfs wenigstens dieser eine Bereich des Grafikdokuments mit Hilfe von Grafikwerkzeugen unter Verwendung des Bildes des flüchtigen Entwurfs erzeugt und sodann das fertige Bild des Grafikentwurfs unter Weglassung des Bildes des flüchtigen Entwurfs ausgedruckt wird.

## Claims

1. Process for generating a finished document which may be printed, by obtaining an image (10) of an initial document by optical scanning, so that said image may be subjected to a subsequent processing, including :
in an initial phase
- determining a document format,
- optically scanning said initial document, and
- displaying on a screen a raw image (10) of initial document in a frame (12) corresponding to said document format, in which an operator, with an input member selected between a member for pointing on screen and a member including shifting keys, moves said image in relation to said frame,
in an intermediate phase
- correcting said raw image (10) in at least one image correcting step by moving said image in relation to said frame corresponding to said format, and
in a subsequent phase
- using said document image (28) for said subsequent processing which is for generating a final document por printing.;

2. Process according to claim 1, **characterized in that** the correcting step including moving the raw image (10) is a step for correcting by translating the image at least in a width or height direction in which an operator drags the image in relation to the frame with said input member.

3. Process according to claim 1, **characterized in that** the correcting step including moving the raw image (10) is a step for correcting by rotatably moving the image in relation to the frame corresponding to format, in which an operator determines on the document a feature parallel to an edge and, with said input member, juxtaposes a straight line and the feature image on the screen, and then controls rotation of the image by the angle between said straight line and an edge corresponding to the frame.

4. Process according to any of preceding claims, **characterized in that** it also includes, after moving the image in the frame, forming a corrected image (28) by suppressing raw image portions outside the frame and by filling frame portions (26) included between image limits and frame (12) limits by filling data.

5. Process according to any of preceding claims, **characterized in that** it includes, during or after the initial phase, a step for setting the frame (12) width (22) displayed on the screen so that, when document image is displayed, the width of document image displayed on screen is equal to the width of the document.

6. Process according to any of preceding claims, **characterized in that** determining the amplitude of correction by image moving includes superposing the document to image displayed in the frame.

7. Process according to any of preceding claims, **characterized in that** it further includes correcting image grey background by operator selecting a rate for a grey correction.

8. Process according to any of claims 1 to 7, **characterized in that** the subsequent processing is for filling a blank form having fields to be filled at least partially and spread on the surface of one or several pages, and the process first includes displaying form image, then at least several steps including positioning a cursor on the image at or near the position of a field, generating an input area at or near the position of the cursor, and inputting data **in that** area, and then printing on a blank form sample data input by said at least several steps, without blank form image.

9. Process according to any of claims 1 to 7, **characterized in that** the subsequent processing is for generating a document corresponding to an initial document having one or several pages, but a portion of which at least is modified, and the process includes firstly displaying the initial document image, and then at least several steps including positioning a cursor on said image at or near the position of the portion to be modified, generating an input area having a non transparent background at the position of the cursor, and inputting data **in that** area, and then printing, on a blank sheet, both data input during said at least several steps and document image, without portions covered by non transparent background of the area.

10. Process according to any of claims 1 to 7, **characterized in that** the subsequent processing is for generating a graphic document from at least a draft, and the process includes, after displaying draft image in a window and correcting draft image by moving in translation or in rotation or by enlarging so that a desired portion of the draft image has wanted position and dimensions, a step for generating at least partially the graphic document with graphic tools and by using draft image for tracing at least partially the desired portion of draft image, and then printing, on a blank sheet, the obtained graphic document, without the draft image.
